# EUROPEAN PATENT SPECIFICATION

(11) **EP 4 261 860 B1**
(45) Date of publication and mention of the grant of the patent: **11.11.2026**
(21) Application number: 21906522.4
(22) Date of filing: 10.12.2021
(51) Int. Cl.: H01G 9/008, H01G 9/10, H01G 13/00, H01G 9/00, B23K 26/06, B23K 26/22, B23K 26/32, B23K 26/323, B23K 101/38, B23K 103/10, B23K 103/12, B23K 103/18, H01R 4/02, H01R 4/62, H01R 43/02, H01G 9/012

(54) **LEAD TERMINAL FOR ELECTROLYTIC CAPACITORS AND METHOD FOR PRODUCING SAME**
ANSCHLUSSKLEMME FÜR ELEKTROLYTKONDENSATOREN UND HERSTELLUNGSVERFAHREN DAFÜR
BORNE DE CONNEXION POUR CONDENSATEURS ÉLECTROLYTIQUES ET SON PROCÉDÉ DE PRODUCTION

(30) Priority: 14.12.2020 JP 2020219983
(43) Date of publication of application: 18.10.2023
(73) Proprietor: Kohoku Kogyo Co., Ltd., Nagahama-shi, Shiga 529-0241 (JP)
(72) Inventor: TSUKUDA, Koji, Nagahama-shi, Shiga 529-0241 (JP); NISHIMIYA, Shuei, Nagahama-shi, Shiga 529-0241 (JP); SASABE, Akihiro, Nagahama-shi, Shiga 529-0241 (JP)
(74) Representative: J A Kemp LLP
(86) International application number: PCT/JP2021/045560
(87) International publication number: WO 2022/131160

(56) References cited:
- WO-A1-2009/107177
- JP-A- 2008 311 615
- JP-A- 2008 311 615
- JP-A- 2009 021 318
- JP-A- 2009 021 318
- JP-B2- 5 461 570
- TW-A- 201 243 337
- US-A1- 2011 058 310
- US-B2- 6 813 141

## Description

### Technical Field

The present invention relates to a lead terminal for an electrolytic capacitor and a method of manufacturing the lead terminal for an electrolytic capacitor.

### Background Art

A lead terminal for an electrolytic capacitor includes an electrode terminal and a lead wire. The electrode terminal is to be connected to an electrode foil forming a capacitor element. The lead wire has one end to be connected to an electrical circuit, and another end to be connected to the electrode terminal via a welded portion.

Hitherto, it has been common that the electrode terminal is formed of a wire made of aluminum, and the lead wire is formed of a CP wire which is a Cu-clad/coated iron wire. However, in recent years, for the purpose of improving thermal conductivity and electrical conductivity, a lead terminal using a lead wire made of copper is increasingly employed.

In the lead terminal of this type, when it is attempted to weld the wire made of aluminum and the lead wire made of copper to each other by means of the same technology as the technology for welding the wire made of aluminum and the CP wire to each other, in some cases, there arises a problem in bonding strength or the like.

In order to solve the above-mentioned problem, in Patent Literature 1, there is proposed a technology of improving the bonding strength between the wire made of aluminum and the lead wire made of copper while using arc welding.
WO 2009/107177 A1 and JP 2009 021318 A disclose background art.

### Citation List

### Patent Literature

[PTL 1] JP 5461570 B2

### Summary of Invention

### (Technical Problem)

Recently, for the purpose of further improving the performance of the lead terminal, a lead terminal in which the electrode terminal is also formed of a wire made of copper is increasingly employed.

In this case, when it is attempted to weld the wire made of copper and the lead wire made of copper to each other by means of a method using arc welding as in Patent Literature 1, the wire made of copper and the lead wire made of copper do not sufficiently melt, and are brought into a state in which a boundary surface is formed therebetween. Thus, there arises a problem that the strength of the welded portion becomes insufficient.

Further, in Patent Literature 1, the technique of the arc welding is devised so that the bonding strength between the wire made of aluminum and the lead wire made of copper is improved. However, it is still difficult to improve the bonding strength therebetween with the related-art arc welding, and similar problems have been caused in some cases.

The present invention has an object to provide a lead terminal for an electrolytic capacitor and a method of manufacturing the lead terminal for an electrolytic capacitor with which the above-mentioned problems can be solved. The invention is defined in claim 1. Further aspects and preferred embodiments are defined in the dependent claims. Any aspects, embodiments and examples of the present disclosure which do not fall under the scope of the appended claims do not form part of the invention and are merely provided for illustrative purposes.

### (Solution to Problem)

In order to achieve the above-mentioned object, according to one embodiment of the present invention, there is provided a method of manufacturing a lead terminal (1) for an electrolytic capacitor, the lead terminal (1) including: an electrode terminal (2) formed of a wire (100) made of copper or aluminum; and a lead wire (3) which is made of copper, and is connected to the electrode terminal (2) via a welded portion (4), the method including: a first step of aligning the wire (100) and the lead wire (3) in a straight line, and holding the wire (100) and the lead wire (3) under a state in which an end surface (101) of the wire (100) on the lead wire side and an end portion of the lead wire (3) on the wire side are brought into abutment against each other; a second step of axially pushing one of the wire (100) and the lead wire (3) toward another of the wire (100) and the lead wire (3) while applying a laser beam to an end portion of the wire (100) on the lead wire side through use of a laser irradiation device (400); and a third step of forming the welded portion (4) formed of an alloy lump obtained by the end portion of the wire (100) on the lead wire side and the end portion of the lead wire (3) on the wire side being melted and solidified; characterised in that the laser irradiation device (400) includes a blue laser or a green laser, and a fiber laser; and the second step includes applying, while simultaneously starting irradiation of a laser beam of the blue laser or the green laser and irradiation of a laser beam of the fiber laser, the laser beam of the blue laser or the green laser for a time period longer by a predetermined time period than a time period of the laser beam of the fiber laser.

### (Advantageous Effect of the Invention)

According to the present invention, the strength of the welded portion of the wire for forming the electrode terminal, which is made of copper or aluminum, and the lead wire made of copper is improved.

### Brief Description of Drawings

FIG. 1 is a perspective view for illustrating an example of a lead terminal for an electrolytic capacitor according to an embodiment of the present invention.
FIG. 2 is a view to be used for describing an example of a method of manufacturing the lead terminal of FIG. 1.
FIG. 3 is a SEM image of a cross section of a welded portion of the lead terminal of FIG. 1.
FIG. 4 is a SEM image of a cross section of a welded portion as a comparative example formed by arc welding.
FIG. 5 is a view to be used for describing a method of manufacturing a lead terminal for an electrolytic capacitor according to a fourth embodiment of the present invention.

### Description of Embodiments

Now, a lead terminal for an electrolytic capacitor and a method of manufacturing the lead terminal for an electrolytic capacitor according to an embodiment of the present invention are described with reference to the drawings.

First, a configuration of the lead terminal according to this embodiment is described.

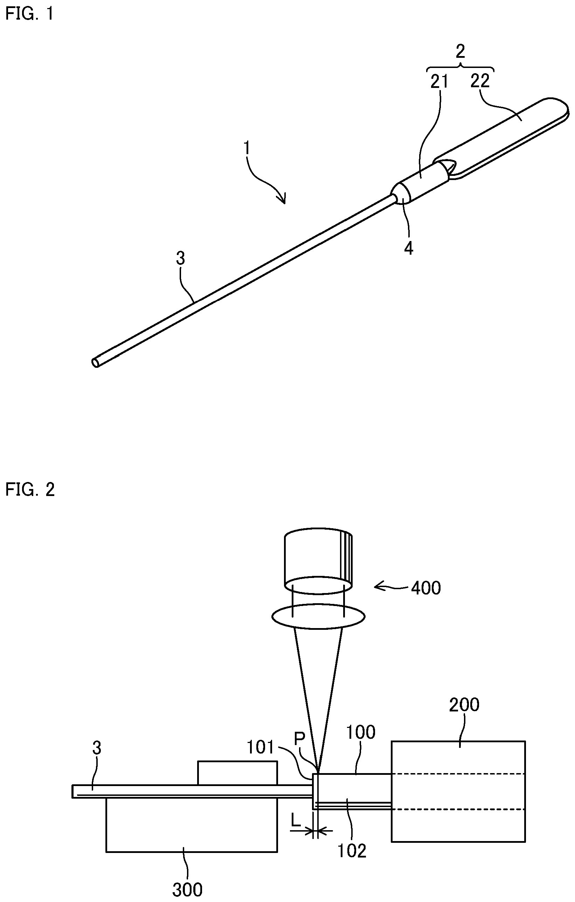

As illustrated in FIG. 1, a lead terminal 1 includes an electrode terminal 2 made of copper and a lead wire 3 made of copper.

The electrode terminal 2 is formed by radially pressing a part of a copper wire in an axial direction thereof, the copper wire serving as a wire. The electrode terminal 2 includes a bar-shaped portion 21 on one end side and a pressed portion 22 on another end side.

The bar-shaped portion 21 is a part remaining without being pressed (that is, another part of the copper wire in the axial direction).

The pressed portion 22 is formed by pressing the above-mentioned part of the copper wire into a planar shape, and cutting its outer periphery along its thickness direction.

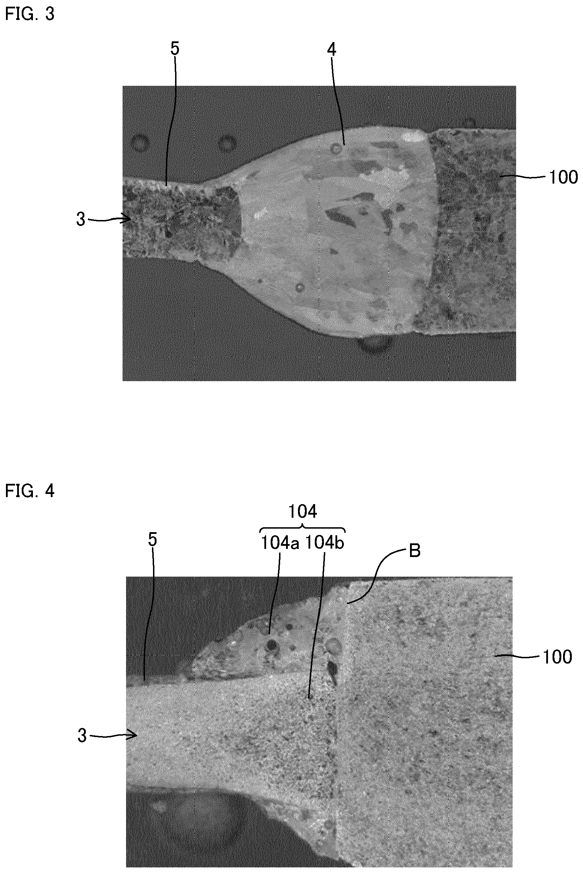

The lead wire 3 is a copper wire whose outer periphery is covered with a tin plating layer 5 (see FIG. 3). The lead wire 3 has a diameter smaller than that of the bar-shaped portion 21.

One end of the bar-shaped portion 21 is connected to the lead wire 3 via a welded portion 4. An axis of the bar-shaped portion 21 and an axis of the lead wire 3 are coaxial with each other.

Next, with reference to FIG. 2, a method of manufacturing the lead terminal 1 is described.

First, a long copper wire (having a diameter of 2 mm), which is a raw material of the electrode terminal 2, is cut into a predetermined length so that a wire 100 is formed.

Further, a long copper wire (having a diameter of 0.8 mm) (strictly speaking, a copper wire covered with the tin plating layer), which is a raw material of the lead wire 3, is cut into a predetermined length so that the lead wire 3 is formed.

Next, the wire 100 is held by a jig 200, and the lead wire 3 is held by a jig 300. Thus, the wire 100 and the lead wire 3 are aligned in a straight line so that axes of the wire 100 and the lead wire 3 are coaxial with each other, and the wire 100 and the lead wire 3 are brought into a state in which one end surface 101 of the wire 100 and an end portion of the lead wire 3 are brought into abutment against each other (brought into contact with each other) (first step).

Next, from a direction orthogonal to the axis of the wire 100, a laser beam is applied by a laser irradiation device 400 (having an output of 1 kW and a beam diameter of 150 µm) to a position P on an outer peripheral surface 102 of the wire 100, the position P being close to the end surface 101. In this embodiment, a distance L from the end surface 101 to an irradiation position of the laser beam is set to 0.1 mm. The irradiation device 400 is a hybrid laser irradiation device in which a blue laser and a fiber laser (infrared laser) are combined (that is, the irradiation device 400 includes the blue laser and the fiber laser). The irradiation device 400 simultaneously starts irradiation of a laser beam of the blue laser and irradiation of a laser beam of the fiber laser to the position P of the wire 100. The blue laser has an output lower than that of the fiber laser, and can apply a laser beam with a spot diameter of about ten times as large as that of the fiber laser. Accordingly, through irradiation of the laser beam of the blue laser, the wire 100 at the position P and the vicinity thereof melts, and heat of a molten part is conducted to the lead wire 3. As a result, the end portion (end portion on the lead wire 3 side) of the wire 100 and the end portion (end portion on the wire 100 side) of the lead wire 3 gradually melt. That is, a molten pool is enlarged by the blue laser, and the state of the molten pool is stabilized. The term "stabilized" here means that the state of the molten pool is "brought into a state in which the laser beam of the fiber laser can be suitably applied." Meanwhile, the fiber laser can apply the laser beam with an output higher than that of the blue laser and with a spot diameter smaller than that of the blue laser. Accordingly, through irradiation of the laser beam of the fiber laser, the end portion of the wire 100 and the end portion of the lead wire 3 further deeply melt into each other. That is, the irradiation device 400 simultaneously applies two types of laser beams having different outputs and different spot diameters.

The irradiation device 400 is configured to apply the laser beam of the blue laser for a time period longer than that of the laser beam of the fiber laser by a predetermined time period T. In other words, the blue laser is configured to continue the irradiation of the laser beam for the predetermined time period T even after the irradiation of the laser beam of the fiber laser is ended (reasons are described later). At a time point at which the irradiation of the laser beam of the blue laser is ended, the end portion of the wire 100 and the end portion of the lead wire 3 are entirely melted.

Here, a pushing mechanism (not shown) is provided to the jig 300. The pushing mechanism is configured to allow application of an external force in a predetermined direction. In this embodiment, the pushing mechanism applies, to the lead wire 3, an external force of axially pushing the lead wire 3 toward the wire 100 at a time point at which the irradiation of the laser beam of the blue laser is started by the irradiation device 400. In this manner, the lead wire 3 is pushed toward the wire 100 under a state in which each of the end portion of the wire 100 and the end portion of the lead wire 3 is melted.

The description above corresponds to a second step.

After that, the welded portion 4 (see FIG. 1) formed of an alloy lump obtained by the end portion of the wire 100 and the end portion of the lead wire 3 being melted and solidified is formed (third step). In other words, through solidification of the molten part, the welded portion 4 having a cone shape (strictly speaking, a substantial truncated cone shape whose diameter is reduced from the wire 100 toward the lead wire 3) is formed between the wire 100 and the lead wire 3 so that the wire 100 and the lead wire 3 are connected to each other. Now, the reason why the laser beam of the blue laser is applied for a time period longer by the predetermined time period T than that of the laser beam of the fiber laser is described. When the irradiation of the laser beam of the blue laser and the irradiation of the laser beam of the fiber laser are ended at the same time, there is a possibility that the molten part is rapidly cooled so that the shape of the welded portion is distorted (that is, a part that is directly irradiated with the laser beam and a part that is not directly irradiated with the laser beam (typically, a part on the back side of the irradiated part) are solidified into different shapes due to a temperature difference). In view of the above, in this embodiment, the laser beam of the blue laser, which has a relatively low output and a relatively large spot diameter, is applied for a time period longer by the predetermined time period T than that of the laser beam of the fiber laser so that the molten part is gradually cooled. With this configuration, the increase of the temperature difference between the part that is directly irradiated with the laser beam and the part that is not directly irradiated with the laser beam can be suppressed. As a result, the welded portion 4 can be shaped to have rotational symmetry with respect to the axis.

Subsequently, an another end side of the wire 100 is pressed so that the pressed portion 22 illustrated in FIG. 1 is formed. In this manner, the lead terminal 1 is manufactured.

The fiber laser has a feature that an energy density is extremely high and deep weld-penetration can be obtained. Accordingly, when the wire 100 and the lead wire 3 are welded to each other through use of the fiber laser alone, only an irradiation position of the laser beam may be locally and greatly melted due to the excess output of the fiber laser. Thus, there has been a problem that it is difficult to melt a desired place. In addition, there has been a problem that spatters are scattered around. In view of the above, this embodiment employs a hybrid method using the blue laser in addition to the fiber laser. The blue laser has a feature that a heat input is stable (in particular, a heat input to copper is stable) and uneven melting is less liable to occur. Accordingly, through use of the blue laser, the molten pool can be enlarged and stabilized. Thus, as compared to a case in which welding is performed through use of the fiber laser alone, the output of the fiber laser can be suppressed. As a result, local melting is less liable to occur, and generation of spatters can be suppressed.

Further, the pushing mechanism may apply the external force to the lead wire 3 at a time point at which a predetermined time period has elapsed from the start of the irradiation of the laser beam (that is, at a time point at which each of the end portion of the wire 100 and the end portion of the lead wire 3 is melted to some extent). Further, the pushing mechanism may be provided to the jig 200 instead of the jig 300. That is, the pushing mechanism may be configured to apply, to the wire 100, an external force of axially pushing the wire 100 toward the lead wire 3.

In this embodiment, the wire 100 and the lead wire 3 are welded to each other through use of the laser beams, and hence, as compared to the case in which the welding is performed by means of arc welding, a molten amount of the wire 100 and the lead wire 3 is increased (in other words, a part that cannot be melted by arc welding can be melted).

FIG. 3 is a scanning electron microscopy (SEM) image of a cross section of the welded portion 4 and the vicinity thereof at the time when the lead terminal 1 is cut along a plane including the axis thereof. As shown in FIG. 3, in the welded portion 4, over the entire range, copper, which is the raw material of the wire material 100, and copper and tin, which are the raw material of the lead wire 3, are melted and solidified so as to form an alloy lump, and no boundary surface is formed inside of the welded portion 4. That is, the welded portion 4 is formed of an alloy lump obtained by the end portion of the wire 100 and the end portion of the lead wire 3 being melted and solidified. Here, "the welded portion 4 is formed of an alloy lump" means that the welded portion 4 is an alloy over its entire range (in other words, means that the entire part of the welded portion 4 is an alloy). The reason therefor is considered to be because, through use of a laser beam having a high energy density, the end portion of the wire 100 and the end portion of the lead wire 3 are melted over their entire ranges, and thus are solidified under a state in which the materials are uniformly mixed as a whole.

In contrast, FIG. 4 is a SEM image of a cross section of a welded portion 104 and a vicinity thereof at the time when a lead terminal serving as a comparative example and being manufactured by welding the wire 100 and the lead wire 3 to each other by means of arc welding is cut along a plane including an axis of the lead terminal. As shown in FIG. 4, copper, which is the raw material of the wire 100, is hardly melted. The welded portion 104 includes a part 104a in which copper and tin, which are the raw material of the lead wire 3, are partially melted and solidified, and a part 104b in which the lead wire 3 remains without being melted. As a result, a boundary surface B is formed between the welded portion 104 and the wire 100. Accordingly, when an external force is applied to the wire 100 or the lead wire 3 of this lead terminal in a direction orthogonal to the axial direction, the lead terminal is easily broken from the boundary surface B serving as a starting point. This breaking is considered to be caused due to a relatively high melting point of copper. That is, the output of the arc welding is not so high as that of laser welding, and hence it is difficult to melt the wire 100 which is made of copper and has a relatively large diameter by arc welding, and arc welding only allows the surface of the lead wire 3 having a relatively small diameter to partially melt. Accordingly, the welded portion 104 contains almost no copper, which is the raw material of the wire 100, and it is thus considered that the boundary surface B is formed between the welded portion 104 and the wire 100. As described above, with the configuration of this embodiment, as compared to the case in which the wire 100 and the lead wire 3 are welded to each other by arc welding, the strength of the welded portion 4 is improved. As a result, the lead terminal 1 having an excellent vibration resistance can be achieved.

Further, the laser beam is applied to the position P on the outer peripheral surface 102 of the wire 100, the position P being close to the end surface 101. Thus, formation of the welded portion 4 at a position biased with respect to the center of the end surface 101 of the wire 100 can be suppressed.

The structure of the alloy lump of the welded portion 4 was analyzed by an electron probe micro analyzer (EPMA), and it was confirmed that the alloy lump was a solid solution (strictly speaking, a substitutional solid solution). A solid solution is an alloy obtained when, while a crystal structure of an original metal is maintained, another metal is randomly mixed with the original metal. A substitutional solid solution is a solid solution obtained when atoms of the original metal are randomly replaced with atoms of another metal.

The alloy lump of the welded portion 4 may be an intermetallic compound having a crystal structure completely different from that of the original metal.

In this embodiment, under a state in which the laser irradiation device 400 is fixed with respect to the wire 100, the laser beam is applied in the direction orthogonal to the axis of the wire 100, but the laser beam may be applied in a direction intersecting with the axis of the wire 100 at an angle other than 90°.

Further, in this embodiment, preferred results were obtained when the distance L was set to L=0.1 mm, but the distance L is not limited to 0.1 mm.

Further, in this embodiment, the wire 100, which is the raw material of the electrode terminal 2, and the lead wire 3 are welded to each other, and then the wire 100 is pressed so that the electrode terminal 2 is formed. However, instead of employing this method, the wire 100 may be first pressed so that the electrode terminal 2 is formed, and then the lead wire 3 may be welded to one end of its bar-shaped portion 21. The same holds true also in other embodiments described below. As described above, the bar-shaped portion 21 is a part of the wire 100 remaining without being pressed. Accordingly, in this specification, even when the pressing is performed before the laser welding, a member to be irradiated with the laser beam is sometimes referred to as "wire 100" instead of "bar-shaped portion 21."

Further, in this embodiment, the laser irradiation device in which the blue laser and the fiber laser are combined is used, but a different laser (for example, a green laser) may be used in place of the blue laser. In this case, the green laser can be configured to apply the laser beam for a time period longer by a predetermined time period than that of the fiber laser while starting irradiation of the laser beam at the same time as that of the fiber laser. The same holds true also in the other embodiments described below.

Next, a method of manufacturing the lead terminal 1 according to a second embodiment of the present invention is described. In this embodiment, the laser beam is applied to the wire 100 while the wire 100 is rotated about an axis thereof relative to the laser irradiation device 400.

In this case, the welded portion 4 can easily have a beautiful cone shape (truncated cone shape) having rotational symmetry with respect to the axis, and hence an external appearance is improved.

Further, when the irradiation position of the laser beam on the outer peripheral surface 102 of the wire 100 is fixed, the energy concentrates at one point, and hence there is a possibility that a recess is formed on the outer peripheral surface 102 depending on the output of the laser beam. However, in this embodiment, the part irradiated with the laser beam on the outer peripheral surface 102 of the wire 100 is moved in a circumferential direction, and hence the recess is less liable to be formed on the outer peripheral surface 102.

Next, a method of manufacturing the lead terminal 1 according to a third embodiment of the present invention is described. In this embodiment, the irradiation device 400 of the fiber laser is moved relative to the wire 100 so that the irradiation position of the laser beam reciprocates by a predetermined distance in the axial direction of the wire 100.

In this manner, the part irradiated with the laser beam on the outer peripheral surface of the wire 100 is moved in the axial direction, and hence the recess is less liable to be formed on the outer peripheral surface 102 of the wire 100.

The method of applying the laser beam in this embodiment may be combined with the method of applying the laser beam in the second embodiment.

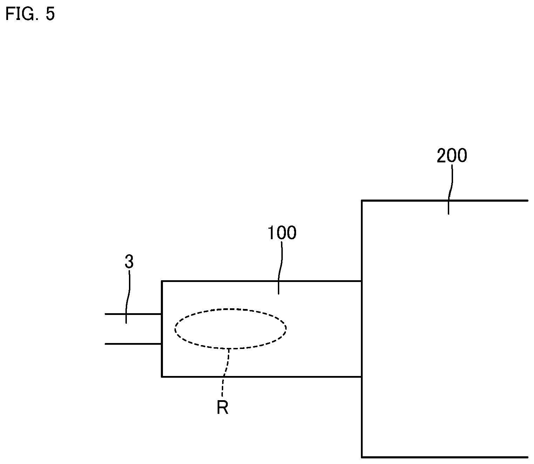

Next, a method of manufacturing the lead terminal 1 according to a fourth embodiment of the present invention is described. In this embodiment, as illustrated in FIG. 5, the irradiation device 400 of the fiber laser is moved relative to the wire 100 so that the irradiation position of the laser beam is moved along a trajectory R having an elliptical shape (strictly speaking, a trajectory R in which a shape in plan view is an elliptical shape). In the elliptical shape, the axial direction of the wire 100 corresponds to a major axis direction, and the elliptical shape has a major axis and a minor axis within a predetermined range. It is needless to say that the trajectory R includes a circular shape as well.

In this case, as compared to the case in which the irradiation position of the laser beam reciprocates in the axial direction of the wire 100 as in the third embodiment, the range of the part irradiated with the laser beam on the outer peripheral surface of the wire 100 is enlarged, and hence the recess is further less liable to be formed on the outer peripheral surface 102 of the wire 100.

The method of applying the laser beam in this embodiment may be combined with the method of applying the laser beam in the second embodiment.

The mode in which the irradiation position of the laser beam is moved on the wire 100 is not limited to that in each of the above-mentioned embodiments.

Further, in each of the above-mentioned embodiments, the case in which the wire 100 (including the electrode terminal 2) made of copper and the lead wire 3 made of copper are welded to each other has been described, but the present invention is also applicable to a case in which a wire (including an electrode terminal) made of aluminum and a lead wire made of copper are welded to each other. In this case, the welded portion 4 is formed of an alloy lump obtained by aluminum, which is the raw material of the wire, and copper and tin, which are the raw material of the lead wire being melted and solidified.

### Reference Signs List

1: lead terminal, 2: electrode terminal, 3: lead wire, 4: welded portion, 21: bar-shaped portion, 22: pressed portion, 100: wire, 101: end surface, 102: outer peripheral surface, 400: laser irradiation device

## Claims

1. A method of manufacturing a lead terminal (1) for an electrolytic capacitor, the lead terminal (1) including an electrode terminal (2) formed of a wire (100) made of copper or aluminum; and a lead wire (3) which is made of copper, and is connected to the electrode terminal (2) via a welded portion (4), the method comprising:
a first step of aligning the wire (100) and the lead wire (3) in a straight line, and holding the wire (100) and the lead wire (3) under a state in which an end surface (101) of the wire (100) on the lead wire side and an end portion of the lead wire (3) on the wire side are brought into abutment against each other;
a second step of axially pushing one of the wire (100) and the lead wire (3) toward another of the wire (100) and the lead wire (3) while applying a laser beam to an end portion of the wire (100) on the lead wire side through use of a laser irradiation device (400); and
a third step of forming the welded portion (4) formed of an alloy lump obtained by the end portion of the wire (100) on the lead wire side and the end portion of the lead wire (3) on the wire side being melted and solidified;
**characterised in that**:
the laser irradiation device (400) includes a blue laser or a green laser, and a fiber laser; and
the second step includes applying, while simultaneously starting irradiation of a laser beam of the blue laser or the green laser and irradiation of a laser beam of the fiber laser, the laser beam of the blue laser or the green laser for a time period longer by a predetermined time period than a time period of the laser beam of the fiber laser.

2. The method of manufacturing a lead terminal according to claim 1, wherein the second step includes applying the laser beam to a position on an outer peripheral surface (102) of the wire (100), the position being close to the end surface (101).

3. The method of manufacturing a lead terminal according to claim 1, wherein the second step includes applying the laser beam to the wire (100) while moving the laser irradiation device (400) relative to the wire (100) within a predetermined range.

4. The method of manufacturing a lead terminal according to claim 3, wherein the laser beam is applied to the wire (100) while the wire (100) is rotated about an axis thereof relative to the laser irradiation device (400).

5. The method of manufacturing a lead terminal according to claim 3 or 4, wherein the irradiation device (400) is moved relative to the wire (100) such that an irradiation position of the laser beam is caused to reciprocate by a predetermined distance in an axial direction of the wire (100).

6. The method of manufacturing a lead terminal according to claim 3 or 4, wherein an irradiation position of the laser beam is moved along a trajectory having an elliptical shape in which an axial direction of the wire (100) corresponds to a major axis direction.

## Patentansprüche

1. Verfahren zur Herstellung eines Leitungsanschlusses (1) für einen Elektrolytkondensator, wobei der Leitungsanschluss (1) Folgendes enthält: einen Elektrodenanschluss (2), der aus einem Draht (100) aus Kupfer oder Aluminium gebildet ist; und einen Leitungsanschluss (3), der aus Kupfer besteht und über einen Schweißabschnitt (4) mit dem Elektrodenanschluss (2) verbunden ist, wobei das Verfahren umfasst:
einen ersten Schritt des Ausrichtens des Drahts (100) und des Leitungsanschlusses (3) in einer geraden Linie und des Haltens des Drahtes (100) und des Leitungsanschlusses (3) in einem Zustand, in dem eine Endfläche (101) des Drahtes (100) auf der Seite des Leitungsanschlusses und ein Endabschnitt des Leitungsanschlusses (3) auf der Seite des Drahtes aneinander anliegen;
einen zweiten Schritt des axialen Verschiebens entweder des Drahts (100) oder des Leitungsanschlusses (3) in Richtung des jeweils anderen Drahts (100) oder Leitungsanschlusses (3), während ein Laserstrahl unter Verwendung einer Laserbestrahlungsvorrichtung (400) auf einen Endabschnitt des Drahtes (100) auf der Leitungsanschlussseite gerichtet wird; und
einen dritten Schritt des Bildens des Schweißabschnitts (4), der aus einer Legierungsmasse besteht, die dadurch entsteht, dass der Endabschnitt des Drahtes (100) auf der Leitungsanschlussseite und der Endabschnitt des Leitungsanschlusses (3) auf der Drahtseite geschmolzen und erstarrt sind; **dadurch gekennzeichnet, dass**:
die Laserbestrahlungsvorrichtung (400) einen blauen Laser oder einen grünen Laser sowie einen Faserlaser enthält; und
der zweite Schritt das Aufbringen des Laserstrahls des blauen Lasers oder des grünen Lasers über einen Zeitraum enthält, der um eine vorbestimmte Zeitspanne länger ist als der Zeitraum des Laserstrahls des Faserlasers, während gleichzeitig die Bestrahlung mit einem Laserstrahl des blauen Lasers oder des grünen Lasers und die Bestrahlung mit einem Laserstrahl des Faserlasers gestartet werden.

2. Verfahren zur Herstellung eines Leitungsanschlusses nach Anspruch 1, wobei der zweite Schritt den Laserstrahl auf eine Position an einer Außenumfangsfläche (102) des Drahts (100) aufbringt, wobei sich die Position nahe der Endfläche (101) befindet.

3. Verfahren zur Herstellung eines Leitungsanschlusses nach Anspruch 1, wobei der zweite Schritt das Aufbringen des Laserstrahls auf den Draht (100) enthält, während die Laserbestrahlungsvorrichtung (400) relativ zum Draht (100) innerhalb eines vorbestimmten Bereichs bewegt wird.

4. Verfahren zur Herstellung eines Leitungsanschlusses nach Anspruch 3, wobei der Laserstrahl auf den Draht (100) gerichtet wird, während der Draht (100) um eine seiner Achsen relativ zur Laserbestrahlungsvorrichtung (400) gedreht wird.

5. Verfahren zur Herstellung eines Leitungsanschlusses nach Anspruch 3 oder 4, wobei die Bestrahlungsvorrichtung (400) relativ zum Draht (100) so bewegt wird, dass eine Bestrahlungsposition des Laserstrahls um einen vorbestimmten Abstand in axialer Richtung des Drahtes (100) hin- und herbewegt wird.

6. Verfahren zur Herstellung eines Leitungsanschlusses nach Anspruch 3 oder 4, wobei eine Bestrahlungsposition des Laserstrahls entlang einer elliptischen Bahn bewegt wird, bei der die axiale Richtung des Drahts (100) der Richtung der Hauptachse entspricht.

## Revendications

1. Procédé de fabrication d'une borne de connexion (1) pour un condensateur électrolytique, la borne de connexion (1) comprenant une borne d'électrode (2) composée d'un fil (100) en cuivre ou en aluminium, et un fil conducteur (3) en cuivre qui est relié à la borne d'électrode (2) par le biais d'une partie soudée (4), le procédé comprenant :
une première étape consistant à aligner le fil (100) et le fil conducteur (3) en ligne droite, et à maintenir le fil (100) et le fil conducteur (3) dans une position telle qu'une surface d'extrémité (101) du fil (100) côté fil conducteur et une partie d'extrémité du fil conducteur (3) côté fil soient en aboutement l'une contre l'autre,
une deuxième étape consistant à pousser axialement le fil (100) vers le fil conducteur (3) ou le fil conducteur (3) vers le fil (100) tout en appliquant un faisceau laser sur une partie d'extrémité du fil (100) côté fil conducteur à l'aide d'un dispositif de rayonnement laser (400), et
une troisième étape consistant à former la partie soudée (4) constituée d'une bosselure d'alliage obtenue par fusion et solidification de la partie d'extrémité du fil (100) côté fil conducteur et de la partie d'extrémité du fil conducteur (3) côté fil,
**caractérisé en ce que** :
le dispositif de rayonnement laser (400) comprend un laser bleu ou un laser vert, ainsi qu'un laser à fibre, et
la deuxième étape comprend, alors que démarrent simultanément le rayonnement d'un faisceau du laser bleu ou du laser vert et le rayonnement d'un faisceau du laser à fibre, l'application du faisceau du laser bleu ou du laser vert pendant une durée qui est supérieure, d'une durée prédéterminée, à la durée du faisceau du laser à fibre.

2. Procédé de fabrication d'une borne de connexion selon la revendication 1, dans lequel la deuxième étape comprend l'application du faisceau laser à un emplacement situé sur une surface périphérique extérieure (102) du fil (100), à proximité de la surface d'extrémité (101).

3. Procédé de fabrication d'une borne de connexion selon la revendication 1, dans lequel la deuxième étape comprend l'application du faisceau laser sur le fil (100) alors que se déplace le dispositif de rayonnement laser (400) par rapport au fil (100) dans une plage prédéterminée.

4. Procédé de fabrication d'une borne de connexion selon la revendication 3, dans lequel le faisceau laser est appliqué sur le fil (100) pendant que le fil (100) tourne sur son axe par rapport au dispositif de rayonnement laser (400).

5. Procédé de fabrication d'une borne de connexion selon la revendication 3 ou 4, dans lequel le dispositif de rayonnement (400) est déplacé par rapport au fil (100) de telle façon qu'une position de rayonnement du faisceau laser est amenée à changer de manière alternée sur une distance prédéterminée dans la direction axiale du fil (100).

6. Procédé de fabrication d'une borne de connexion selon la revendication 3 ou 4, dans lequel la position de rayonnement du faisceau laser change le long d'une trajectoire de forme elliptique dans laquelle la direction axiale du fil (100) correspond à la direction du grand axe.
